# FASCICULE DE BREVET EUROPEEN

(11) **EP 1 669 305 B1**
(45) Date de publication et mention de la délivrance du brevet: **10.04.2013**
(21) Numéro de dépôt: 05292493.3
(22) Date de dépôt: 24.11.2005
(51) Int. Cl.: B65D 81/26

(54) **Dispositif de conditionnement d'un produit de coloration capillaire**
Aufbewahrungsvorrichtung für Haarfärbemittel
Storage device for hair coloring agent

(30) Priorité: 10.12.2004 FR 0452921
(43) Date de publication de la demande: 14.06.2006
(73) Titulaire: L'Oréal, 75008 Paris (FR)
(72) Inventeur: Julien, Jean-Marie, 78160 Marly Le Roi (FR); De Laforcade, Vincent, 78120 Rambouillet (FR)
(74) Mandataire: Julio, Charlotte

(56) Documents cités:
- EP-A- 0 407 314
- EP-A- 0 852 206
- US-A- 4 190 477
- US-A- 4 387 126

## Description

La présente invention a pour objet un dispositif de conditionnement réalisé au moins en partie au moyen d'une feuille formant un complexe multicouche permettant le conditionnement de produits sensibles à la lumière, aux gaz et/ou à l'humidité.

Il est connu de protéger de tels produits sensibles par des emballages. Des emballages particulièrement appropriés se présentent sous forme de feuilles aptes à entourer ces produits quelles que soient leurs dimensions, ces feuilles étant par exemple agencées de manière à former un sachet ou une poche souple autour du produit.

Pour rendre ce type d'emballages imperméables à la lumière, aux gaz et à la vapeur, le matériau dont est fait l'emballage doit présenter au moins une couche formant barrière. Une couche formant barrière particulièrement appropriée peut être constituée par exemple par une feuille métallique. La feuille métallique n'étant pas en mesure de satisfaire à toutes les conditions exigées d'un matériau d'emballage, on applique dans la pratique sur une face ou les deux faces de la feuille métallique d'autres couches, et notamment des couches de matières plastiques. Ces couches peuvent être par exemple des couches laminées par extrusion ou appliquées au moyen d'un agent d'adhésion sous forme de feuilles en matières thermoplastiques. Ces matériaux feuilletés contenant plusieurs couches permettent de fournir des matériaux d'emballage aptes au façonnage.

En particulier, le document EP 0 863 812 décrit un matériau feuilleté qui comprend une couche de plastique accolée au moyen d'un agent d'adhésion à une couche de polyamide orienté (oPA) elle-même accolée au moyen d'un agent d'adhésion à un premier côté d'une feuille d'aluminium, le deuxième côté de cette feuille d'aluminium, opposé au premier côté, étant recouvert d'une couche de PVC par l'intermédiaire d'un agent d'adhésion. Il est connu d'utiliser en tant qu'agent d'adhésion des polymères particuliers tels que les polyuréthannes.

Il est connu du document US 4 284 672 un matériau feuilleté qui comprend une couche extérieure en polymère thermoplastique bi-axialement orienté, une couche intermédiaire métallique, une couche favorisant l'adhésion entre la couche métallique et une couche intérieure qui elle est constituée d'un polymère thermoscellable sur lui-même. La couche favorisant l'adhésion est notamment une couche d'un copolymère d'acide acrylique et d'éthylène. Le matériau décrit dans ce document permet en particulier d'obtenir des emballages très plats et donc faciles à transporter et résistant à une contrainte mécanique.

Un problème se pose dans l'état de la technique lorsque des matériaux feuilletés sont utilisés pour emballer et conditionner des produits tels que des compositions contenant un agent alcalinisant, en particulier celles contenant de l'ammoniaque. Ce problème est particulièrement important dans le domaine de la coloration des fibres kératiniques.

En effet, lorsque de telles compositions sensibles à l'air et en particulier à l'oxygène sont conditionnées dans des sachets réalisés au moyen de tels matériaux feuilletés, il est observé, au bout d'un temps de stockage de quelques semaines, un délaminage intérieur du sachet. Ce délaminage est notamment observé entre les couches reliées entre elles par un agent d'adhésion, et plus particulièrement entre les couches de matériaux disposées du côté de la couche métallique mise en regard dudit produit.

Ce délaminage se traduit par une séparation physique des couches du matériau feuilleté, pourtant initialement solidaires les unes des autres. Il a également pour conséquence la rupture de l'étanchéité du sachet ainsi formé. En effet, ce délaminage peut aussi s'accompagner d'une fragmentation de la couche métallique, et le produit contenu risque alors de s'écouler hors de son conditionnement et les gaz, solvants ou matières aromatiques qu'il contient risquent de diffuser hors du sachet. Et dans tous les cas, des phénomènes de perméation gazeuse surviennent, le produit étant alors dégradé et rendu impropre à l'utilisation. Dans de telles conditions, la conservation du produit n'est pas garantie sur une longue durée.

Il existe un besoin pour de nouveaux matériaux feuilletés pouvant être mis au contact de solutions alcalines, à savoir ayant un pH supérieur à 7 et de préférence supérieur à 9, et ou oxydantes, et en particulier au contact de compositions pour la teinture des fibres kératiniques tout en garantissant l'étanchéité des emballages formés à partir de tels matériaux feuilletés.

L'objet de la présente invention est donc de proposer un dispositif de conditionnement comprenant :
i) au moins une feuille souple délimitant au moins en partie un logement, ladite feuille souple formant un complexe multicouche comportant :
   a) une couche métallique ;
   b) un agent d'adhésion comportant un copolymère comprenant au moins 7 % en poids de motifs carboxyliques et/ou carboxylates, les motifs carboxyliques pouvant être sous forme d'acide ou de sels, et
   c) une couche d'un matériau non métallique, liée à la couche métallique via ledit agent d'adhésion,
ii) une composition cosmétique disposée à l'intérieur du logement.

Par « composition cosmétique » on entend une composition cosmétique ou au moins un composé destiné à la préparation d'une composition cosmétique.

L'invention concerne donc un dispositif de conditionnement d'un produit comportant au moins une première paroi délimitant au moins en partie un logement contenant ledit produit, cette première paroi étant réalisée à partir d'un matériau feuilleté comportant au moins une structure en couches présentées dans l'ordre suivant :
a) une couche métallique,
b) une couche d'un agent d'adhésion comportant un copolymère comprenant au moins 7 % en poids de motifs carboxyliques et/ou carboxylates, les motifs carboxyliques pouvant être sous forme d'acide ou de sels, et
c) une première structure extérieure,
ladite première paroi étant agencée de telle sorte que la première structure extérieure forme une face interne dirigée vers l'intérieur du logement apte à être mise au contact dudit produit.

Un tel matériau feuilleté permet en particulier d'obtenir des emballages plus résistants aux délaminages entre la couche métallique et la structure extérieure, éventuellement plastique, en contact avec le produit contenu dans l'emballage, même si cette dernière est mise au contact d'une composition alcaline et/ ou oxydante.

Le terme « copolymère » désigne un polymère obtenu par polymérisation d'au moins deux monomères. De fait, il englobe les copolymères (souvent considérés comme incluant deux monomères polymérisés), les terpolymères (trois monomères polymérisés) et les tétrapolymères (quatre monomères polymérisés).

Avantageusement, le motif carboxylate est un motif acrylate ou méthacrylate. De préférence, ce motif acrylate est l'acrylate d'éthyle.

Avantageusement, le motif carboxylique est l'acide acrylique ou méthacrylique.

De préférence, le copolymère comporte au moins un deuxième monomère présentant un motif alkylénique dont la chaîne alkyle comprend de 2 à 10 atomes de carbone.

En particulier, l'agent d'adhésion peut être un copolymère d'éthylène et d'acrylate d'éthyle. Alternativement, l'agent d'adhésion peut également être un copolymère d'éthylène et d'acide acrylique.

De préférence, l'agent d'adhésion comporte entre 7 % et 19%, plus particulièrement entre 8% et 11%, plus précisément entre 8,5% et 10,5%, et de préférence 9,7%, en poids d'un acide acrylique et ou d'un ester acrylique.

La couche en matériau non métallique forme une première structure extérieure, elle peut notamment être réalisée dans un matériau thermoplastique, de préférence polymère, par exemple à partir de polyéthylène. La couche métallique peut être réalisée à partir d'aluminium ou d'un alliage comportant de l'aluminium.

Selon un mode de réalisation de l'invention, la feuille souple présente une épaisseur comprise entre 70 et 232 µm, tel que
- la couche métallique a une épaisseur comprise entre 6 et 25 µm, étant de préférence de l'ordre de 12 µm,
- la couche d'agent d'adhésion a une épaisseur comprise entre 10 et 40 µm, étant de préférence de l'ordre de 25 µm,
- la couche de matériau non métallique a une épaisseur comprise entre 40 et 150 µm, étant de préférence de l'ordre de 75 µm.

Notamment, le complexe multicouche, dit matériau feuilleté, peut comporter une deuxième structure extérieure en particulier choisie pour protéger mécaniquement au moins la couche métallique, cette deuxième structure extérieure étant accolée à la couche métallique de manière à former une face externe dirigée vers l'extérieur dudit logement. Elle peut être réalisée dans un matériau thermoplastique, de préférence polymère, par exemple à partir de polyéthylène téréphtalate.

Selon un mode de réalisation préféré, la deuxième structure extérieure est solidaire de la couche métallique par l'intermédiaire d'une couche d'un deuxième agent d'adhésion, notamment une colle à base de polyuréthanne. De préférence, cette couche de deuxième agent d'adhésion a une épaisseur comprise entre 2 et 5 µm, étant par exemple de l'ordre de 4 µm, la deuxième structure extérieure ayant une épaisseur comprise entre 10 et 25 µm, et étant de préférence de l'ordre de 12 µm.

Selon un mode de réalisation préféré, le complexe multicouche de la feuille souple est obtenue par laminage. Par exemple, l'agent d'adhésion peut être extrudé.

Cette feuille souple est au moins en partie élastiquement déformable, elle est réalisée de manière à présenter une certaine souplesse pour être notamment apte à être repliée sur elle-même sans rupture de la structure en couche du matériau qui la constitue.

Selon un premier mode de réalisation, le dispositif comporte un fond présentant un logement apte à recevoir ledit produit, ce fond étant obturé par ladite feuille souple, par exemple scellée sur un chant de ce fond, pour délimiter ledit logement.

En variante, selon un deuxième mode de réalisation, le dispositif selon l'invention se présente sous la forme d'un sachet comportant au moins une deuxième paroi scellée à la feuille souple formant une première paroi pour délimiter ledit logement à l'intérieur duquel est enfermé le produit, cette deuxième paroi étant de préférence réalisée à partir du même matériau que la feuille souple.

De préférence, le dispositif de conditionnement est équipé d'un organe de distribution permettant la distribution du produit enfermé dans le dispositif. Par exemple, cet organe de distribution peut être une pompe sans reprise d'air.

Selon un mode de réalisation avantageux, le produit contenu dans le logement est une composition alcaline. Avantageusement, le produit contenu dans le logement est une composition contenant un agent alcalinisant. En particulier, cet agent alcalinisant est choisi parmi l'ammoniaque et/ou l'éthanolamine et/ou le silicate de sodium. Par ailleurs, ladite composition peut de plus contenir au moins une base d'oxydation et éventuellement au moins un coupleur. La composition peut également contenir un ou plusieurs colorants directs.

L'invention a également pour objet l'utilisation d'un dispositif de conditionnement selon l'invention pour conditionner de manière étanche une composition alcaline. Elle a également pour objet l'utilisation d'un tel dispositif selon l'invention pour conditionner de manière étanche une composition contenant un agent alcalinisant, en particulier telle qu'une composition contenant de l'ammoniaque et/ou de l'éthanolamine, cette composition pouvant de plus contenir au moins une base d'oxydation et éventuellement au moins un coupleur, et ou contenir un ou plusieurs colorants directs.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1 : une vue en coupe transversale d'un matériau feuilleté selon l'invention ;
- Figure 2 : une vue en perspective d'un premier dispositif de conditionnement selon l'invention ;
- Figure 3 : une vue en perspective d'un deuxième dispositif de conditionnement selon l'invention ;
- Figure 4 : une vue en coupe d'un troisième dispositif de conditionnement selon l'invention.

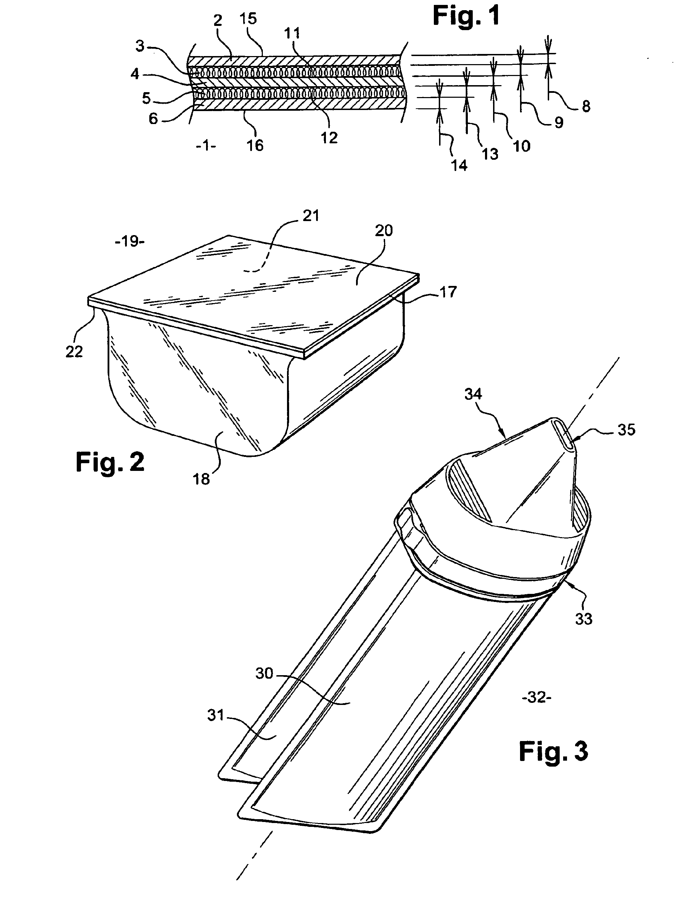

La figure 1 montre un matériau 1 se présentant sous la forme d'une feuille coupée dans son épaisseur, ce matériau 1 forme un complexe multicouche présentant une structure feuilletée comportant au moins les couches suivantes superposées les unes aux autres dans l'ordre suivant:
- une couche métallique 4,
- un agent d'adhésion 5 comportant un copolymère comprenant au moins 7 % en poids de motifs carboxyliques et/ou carboxylates, les motifs carboxyliques pouvant être sous forme d'acide ou de sels, et
- une couche d'un matériau non métallique formant une première structure extérieure 6.

De préférence, ce matériau 1 étant choisi pour conditionner un produit, la couche de matériau non métallique 6 forme une première structure extérieure 6 apte à être mise au contact du produit, et la couche métallique 4 est par ailleurs recouverte, d'un côté opposé à celui au niveau duquel est retenu la première structure extérieure 6, d'une deuxième structure extérieure 2.

Cette deuxième structure extérieure 2 peut être réalisée à partir de une ou plusieurs couches accolées entre elles de papier, de carton, et ou de matériaux thermoplastiques tels que des matières plastiques vinyliques par exemple à base de poly(chlorure de vinyle) (PVC), des polyester, des matières plastiques polyoléfiniques, ou des polyamides.

Des exemples de matière plastique à base de poly(chlorure de vinyle) (PVC) sont des matières plastiques vinyliques, contenant des motifs chlorure de vinyle dans leur structure, telles que des copolymères de chlorure de vinyle avec des esters vinyliques d'acides aliphatiques, des copolymères de chlorure de vinyle avec des esters d'acide acrylique ou méthacrylique ou avec l'acrylonitrile, des copolymères de chlorure de vinyle avec des liaisons diène et des acides dicarboxyliques insaturés ou leurs anhydrides, des copolymères de chlorure de vinyle et de chlorure de vinylidène avec des aldéhydes insaturés, des cétones, etc. ou des polymères et copolymères de chlorure de vinylidène avec du chlorure de vinyle ou d'autres composés polymérisables. Les matières thermoplastiques à base de vinyle peuvent également être assouplies de façon connue en soi au moyen de plastifiants primaires ou secondaires. Les feuilles en PVC peuvent selon le cas être également étirées monoaxialement (oPVC) ou biaxialement.

Des exemples de matière plastique à base de polyesters sont les polyalkylène-téréphtalates ou les polyalkylène-isophtalates ayant des groupes ou radicaux alkyle contenant de 2 à 10 atomes de carbone ou des groupes alkyle contenant de 2 à 10 atomes de C qui sont interrompus au moins par un -O-, comme par exemple le polyéthylène-téréphtalate (feuilles de PET), le polypropylène téréphtalate, le polybutylène-téréphtalate (polytétraméthylènetéréphtalate), le polydécaméthylène-téréphtalate, le poly-1,4-cyclohexyldiméthylol-téréphtalate ou le polyéthylène-2,6-naphtalènedicarboxylate ou les copolymères de polyalkylène-téréphtalate et polyalkylène-isophtalate, la proportion d'isophtalate étant par exemple de 1 à 10 % en mole, des copolymères et terpolymères, ainsi que des polymères séquences et des variantes greffées des substances susmentionnées. D'autres polyesters appropriés, tels que le polyéthylène naphtalate, sont connus dans le monde technique sous l'abréviation PEN.

D'autres polyesters sont des copolymères de l'acide téréphtalique et d'un autre acide polycarboxylique avec au moins un glycol. Sont appropriés les copolyesters de l'acide téréphtalique, d'éthylènegiycol et d'un glycol supplémentaire. On préfère les polyesters glycol-modifiés qui sont connus du monde technique sous la dénomination PETG.

Des polyesters appropriés sont constitués par les polyalkylène-téréphtalates ayant des groupes ou radicaux alkyle comprenant 2 à 10 atomes de carbone et les polyalkylène-téréphtalates ayant des groupes ou radicaux alkyle contenant 2 à 10 atomes de carbone qui sont interrompus par 1 ou 2 -0-.

D'autres polyesters préférés sont les polyalkylène-téréphtalates ayant des groupes ou radicaux alkyle contenant 2 à 4 atomes de carbone et on préfère tout particulièrement les polyéthylène-téréphtalates. On compte parmi ces polyéthylène-téréphtalates également A-PET, PETP et le PETG cité ou le G-PET.

Les exemples de matières polyoléfiniques sont les polyéthylènes (PE), par exemple polyéthylène haute densité (HDPE, densité supérieure à 0,944 g/cm3), polyéthylène de densité moyenne (MDPE, densité de 0,926 à 0,940 g/cm3), polyéthylène linéaire de densité moyenne (LMDPE, densité de 0,926 à 0,940 g/cm3), polyéthylène basse densité (LDPE, densité de 0,910 à 0,925 g/cm3) et polyéthylène linéaire basse densité (LLDPE, densité de 0,916 à 0,925 g/cm3), par exemple sous forme de feuilles non orientées (feuille de PE) ou orientées monoaxialement ou biaxialement (feuille de oPE), des polypropylènes (PP), tels que polypropylène orienté axialement ou biaxialement (feuille de oPP) ou polypropylène coulé (feuille de cPP), polypropylène amorphe ou cristallin ou leurs mélanges ou polypropylène atactique ou isotactique ou leurs mélanges, poly-1-butène, poly-3-méthybutène, poly-4-méthylpentène et leurs copolymères, puis polyéthylène avec acétate de vinyle, alcool vinylique, acide acrylique, tels que par exemple, des résines ionomères, comme des copolymères d'éthylène d'acide acrylique, d'acide méthacrylique, d'esters acryliques, tétrafluoroéthylène ou polypropylène, en outre copolymères statistiques, copolymères séquences ou mélanges polymère d'oléfine-élastomère. Les matériaux polyoléfiniques peuvent également comporter des cyclo-oléfines en tant que monomère d'un homopolymère ou de copolymères.

On préfère les polyéthylènes haute densité et les polypropylènes, ainsi que les ionomères, par exemple connus sous la dénomination commerciale Surlyn.

Les exemples de polyamides (PA) pour les feuilles en matière plastique sont constitués par exemple par le polyamide 6, homopolymère de ε-caprolactame (polycaprolactame) ; le polyamide 11, le polyamide 12, homopolymère de w-laurine-lactame (polylaurinelactame) ; le polyamide 6,6, homopolycondensat d'hexaméthylènediamine et d'acide adipique (polyhexaméthylèneadipamide) ; le polyamide 6,10, homopolycondensat d'hexaméthylènediamide et d'acide sébacique (polyhexaméthylènesébacamide) ; le polyamide 6,12, homopolycondensat d'hexaméthylènediamide et de diacide dodécanoïque (polyhexaméthylènedodécanamide) ou le polyamide 6-3-T, homopolycondensat de triméthylhexaméthylènediamide et d'acide téréphtalique (polytriméthylhexaméthylènetéréphtalamide), ainsi que leurs mélanges. Les feuilles en polyamide sont étirées monoaxialement ou biaxialement (oPA).

La deuxième structure extérieure 2 est de préférence constituée de polyalkylènetéréphtalate par exemple du polyéthylènetheréphtalate de manière à améliorer la résistance aux chocs du matériau 1 finalement réalisé, notamment améliorer la résistance aux chocs qui pourraient être subis depuis le pourtour extérieur du dispositif de conditionnement au moins en partie délimité par une feuille souple formant une première paroi réalisée à partir de ce matériau 1.

La deuxième structure extérieure 2 présente en général une épaisseur 8 comprise entre 12 µm et 25 µm.

Le cas échéant, cette deuxième structure extérieure 2 est accolée à la couche métallique 4 au moyen d'une couche 3 d'un deuxième agent d'adhésion réalisée à partir d'adhésifs de laminage appropriés pouvant contenir des solvants ou être exempts de solvants et également contenir de l'eau. Des exemples d'adhésifs de laminage sont constitués par des adhésifs d'acrylate contenant des solvants, exempts de solvants ou aqueux ou par des systèmes polyuréthanne-adhésif. Mais on peut également utiliser des colles qui durcissent sous l'effet de rayonnements électromagnétiques (par exemple sous un rayonnement UV ou des faisceaux d'électrons). On peut également réaliser cette couche 3 à partir de di-isocyanate ou de polyesters aliphatiques, ou encore à partir de laques appropriées comme par exemple des laques à base d'acrylates, des résines époxy, des résines de mélanine, des résines d'urée, polyuréthannes, nitrate de cellulose, polyesters et leurs mélanges. Les laques par exemple peuvent être à base de solvant ou à base aqueuse ou être des systèmes à un, deux ou plusieurs composants. Les laques sont par exemple durcissables par séchage, à chaud, chimiquement et/ou par rayonnements (UV ; faisceaux d'électrons ; IR).

De préférence, la couche 3 est réalisée en polyuréthanne. Elle a par exemple une épaisseur 9 comprise entre 2 et 5 µm, de préférence de l'ordre de 4 µm.

En variante non représentée, la deuxième structure extérieure 2 est un vernis apte à être directement accolé sur la couche métallique 4.

La feuille métallique 4 selon l'invention peut être en fer, acier, nickel, cuivre, étain, bronze, laiton, aluminium, etc. Avantageusement, la feuille métallique 4 est en aluminium ayant un degré de pureté de 99,95 % à 97 % (% en poids), le reste étant les impuretés inévitables ou des éléments d'alliage. Des exemples d'alliages sont ceux ayant comme composant principal l'aluminium et comme éléments d'alliage Fe ; Si ; Mg ; Mn ; Ti et/ou Cu, comme par exemple les alliages AIFe1.5Mn, AIFeSi ou AIFeSiMn, ayant respectivement une pureté supérieure à 97.5%, et de préférence supérieure à 98.5% (% en poids) d'aluminium.

En particulier, la couche métallique 4 est réalisée à partir d'aluminium, et présente une épaisseur 10 comprise entre 6 et 12 µm, de préférence de l'ordre de 12 µm.

Les faces 11 et 12 de la couche métallique 4 peuvent présenter une adhérence améliorée pour l'agent d'adhésion grâce à un prétraitement tendant notamment à augmenter la tension superficielle de ces faces 11 et 12, par exemple brossage, chromatage, traitement d'ionisation, à l'ozone, couronne, à la flamme ou au plasma.

La couche 5 d'agent d'adhésion comporte un copolymère comprenant au moins 7 % en poids de motifs carboxyliques et/ou carboxylates, les motifs carboxyliques pouvant être sous forme d'acide ou de sels. En particulier, les motifs carboxyliques et/ou carboxylates sont présents en quantité comprise entre 7% et 19 %, et de préférence de l'ordre de 9,7% en poids.

En particulier la couche 5 est un copolymère qui comprend au moins un premier monomère selon le motif suivant

(-CH₂-CR₃COOR₂-)ₘ

R₃ = H ou CH₃,
R₂ = H ou groupe alkyle non substitué, linéaire ou ramifié, tel qu'un groupe méthyle, éthyle, propyle ou isobutyle ou R₂ représente un groupe cycloalkyle C₄ à C₁,
et m étant choisi de telle sorte que ce premier monomère représente entre 7 et 19% en poids du copolymère.

En particulier ce copolymère comprend au moins un second monomère de motif alkylénique contenant de 1 à 10 atomes de carbone, et en particulier présentant un motif éthylénique selon la formule suivante :

(-CH₂-CH₂-)ₙ

n étant choisi de telle sorte que ce second monomère représente entre 71 et 92% en poids du copolymère.

De préférence, le copolymère formant la couche 5 est un copolymère d'éthylène et d'acrylate d'éthyle comportant 9,7% en poids d'acrylate d'éthyle et/ou un copolymère d'éthylène et d'acide acrylique comportant 9,7% en poids d'acide acrylique. La couche 5 a en général une épaisseur 13 comprise entre 10 et 40 µm, de préférence de l'ordre de 25 µm.

Enfin, cette couche 5 d'agent d'adhésion sert à accoler la couche métallique 4 à la première structure extérieure 6, cette dernière étant de préférence réalisée dans un matériau non métallique, et de préférence thermoplastique du même type que ceux donnés ci-dessus en exemple de réalisation pour la deuxième structure extérieure 2. La première structure extérieure 6 peut elle-même être réalisée à partir de une ou plusieurs couches accolées entre elles et réalisées à partir de matériaux éventuellement distincts les uns des autres.

Plus particulièrement la première structure extérieure 6 forme une couche de polyéthylène. Elle a par ailleurs une épaisseur 14 comprise entre 40 et 150 µm, et de préférence de l'ordre de 75 µm.

Les couches et ou respectivement structures 2, 3, 5 et 6 peuvent être transparentes, translucides ou opaques et peuvent être limpides ou colorées partiellement ou totalement.

L'une au moins des faces extérieures 15 et ou 16 du matériau 1, respectivement présentées par les structures extérieures 2 et 6, et de préférence la première, peut être recouverte par un motif imprimé, lui-même éventuellement recouvert par une laque. On peut également doter ces faces extérieures 15 et ou 16 d'une laque, cette laque pouvant être selon le cas également imprimée et/ou susceptible d'être imprimée sur les installations d'emballage, par exemple au moyen de rayons UV, de solvants ou de faisceaux lasers ou d'électrons.

Dans le cas où les couches ou structures extérieures sont réalisées à partir de matières plastiques, elles peuvent être extrudées. En particulier, le matériau 1 est obtenu par laminage des couches les unes sur les autres.

Selon un mode de réalisation particulier du matériau 1, ce matériau 1 peut également comporter un agencement de couches et ou structures symétriques l'une de l'autre de part et d'autre de part et d'autre de la couche métallique 4.

De préférence, ce matériau 1 peut être réalisé sous forme de matériau sans fin tels que des rouleaux, et être découpé ensuite en tronçons à assembler de manière à former des dispositifs de conditionnement.

En particulier, le matériau 1 est utilisé pour participer au conditionnement de produits cosmétiques tels que des compositions de coloration des fibres kératiniques, notamment les compositions pour la coloration d'oxydation contenant un agent alcalinisant.

A titre d'exemple d'agent alcalinisant, on peut citer l'ammoniaque, les carbonates alcalins, les alcanolamines telles que les mono-, di- et triéthanolamines ainsi que leurs dérivés, les hydroxydes de sodium ou de potassium et les composés de formule (II) suivante : 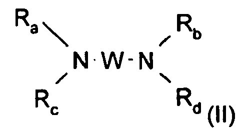 dans laquelle W est un reste propylène éventuellement substitué par un groupement hydroxyle ou un radical alkyle en C₁-C₄ ; Rₐ, R_{b}, R_{c} et R_{d}, identiques ou différents, représentent un atome d'hydrogène, un radical alkyle en C₁-C₄ ou hydroxyalkyle en C₁-C₄.

Selon un mode de réalisation préféré, l'agent alcalinisant est choisi parmi l'ammoniaque et/ou l'éthanolamine.

De façon classique, les compositions pour la coloration d'oxydation des fibres kératiniques, en particulier les cheveux humains comprennent, dans un milieu approprié, au moins une base d'oxydation et éventuellement un ou plusieurs coupleurs.

A titre de bases d'oxydation, on peut citer les para-phénylènediamines, les bis-phénylalkylènediamines, les para-aminophénols, les bis-para-aminophénols, les ortho-aminophénols, les bases hétérocycliques et leurs sels d'addition.

Parmi les para-phénylènediamines, on peut citer à titre d'exemple, la para-phénylènediamine, la para-toluènediamine, la 2-chloro para-phénylènediamine, la 2,3-diméthyl para-phénylènediamine, la 2,6-diméthyl para-phénylènediamine, la 2,6-diéthyl para-phénylènediamine, la 2,5-diméthyl para-phénylènediamine, la N,N-diméthyl para-phénylènediamine, la N,N-diéthyl para-phénylènediamine, la N,N-dipropyl para-phénylènediamine, la 4-amino N,N-diéthyl 3-méthyl aniline, la N,N-bis-(β-hydroxyéthyl) para-phénylènediamine, la 4-N,N-bis-(β-hydroxyéthyl)amino 2-méthyl aniline, la 4-N,N-bis-(β-hydroxyéthyl)amino 2-chloro aniline, la 2-β-hydroxyéthyl para-phénylènediamine, la 2-fluoro para-phénylènediamine, la 2-isopropyl para-phénylènediamine, la N-(β-hydroxypropyl) para-phénylènediamine, la 2-hydroxyméthyl para-phénylènediamine, la N,N-diméthyl 3-méthyl para-phénylènediamine, la N,N-(éthyl, β-hydroxyéthyl) para-phénylènediamine, la N-(β,γ-dihydroxypropyl) para-phénylènediamine, la N-(4'-aminophényl) para-phénylènediamine, la N-phényl para-phénylènediamine, la 2-β-hydroxyéthyloxy para-phénylènediamine, la 2-β-acétylaminoéthyloxy para-phénylènediamine, la N-(β-méthoxyéthyl) para-phénylène-diamine, la 4-aminophénylpyrrolidine, la 2-thiényl para-phénylènediamine, le 2-β hydroxyéthylamino 5-amino toluène, la 3-hydroxy 1-(4'-aminophényl)pyrrolidine et leurs sels d'addition avec un acide.

Parmi les para-phénylènediamines citées ci-dessus, la para-phénylènediamine, la para-toluènediamine, la 2-isopropyl para-phénylènediamine, la 2-β-hydroxyéthyl para-phénylènediamine, la 2-β-hydroxyéthyloxy para-phénylène-diamine, la 2,6-diméthyl para-phénylènediamine, la 2,6-diéthyl para-phénylènediamine, la 2,3-diméthyl para-phénylènediamine, la N,N-bis-(β-hydroxyéthyl) para-phénylènediamine, la 2-chloro para-phénylènediamine, la 2-β-acétylaminoéthyloxy para-phénylènediamine, et leurs sels d'addition avec un acide sont particulièrement préférées.

Parmi les bis-phénylalkylènediamines, on peut citer à titre d'exemple, le N,N'-bis-(β-hydroxyéthyl) N,N'-bis-(4'-aminophényl) 1,3-diamino propanol, la N,N'-bis-(β-hydroxyéthyl) N,N'-bis-(4'-aminophényl) éthylènediamine, la N,N'-bis-(4-aminophényl) tétraméthylènediamine, la N,N'-bis-(β-hydroxyéthyl) N,N'-bis-(4-aminophényl) tétraméthylènediamine, la N,N'-bis-(4-méthyl-aminophényl) tétraméthylènediamine, la N,N'-bis-(éthyl) N,N'-bis-(4'-amino, 3'-méthylphényl) éthylènediamine, le 1,8-bis-(2,5-diamino phénoxy)-3,6-dioxaoctane, et leurs sels d'addition avec un acide.

Parmi les para-aminophénols, on peut citer à titre d'exemple, le para-aminophénol, le 4-amino 3-méthyl phénol, le 4-amino 3-chloro phénol, le 4-amino 2-chloro phénol, le 4-amino 3-fluoro phénol, le 4-amino 3-hydroxyméthyl phénol, le 4-amino 2-méthyl phénol, le 4-amino 2-hydroxyméthyl phénol, le 4-amino 2-méthoxyméthyl phénol, le 4-amino 2-aminométhyl phénol, le 4-amino 2-(β-hydroxyéthyl aminométhyl) phénol, le 4-amino 2-fluoro phénol, et leurs sels d'addition avec un acide.

Parmi les ortho-aminophénols, on peut citer à titre d'exemple, le 2-amino phénol, le 2-amino 5-méthyl phénol, le 2-amino 6-méthyl phénol, le 5-acétamido 2-amino phénol, et leurs sels d'addition avec un acide.

Parmi les bases hétérocycliques, on peut citer à titre d'exemple, les dérivés pyridiniques, les dérivés pyrimidiniques, les dérivés pyrazoliques, et les dérivés indoliques ou indoliniques.

Parmi les dérivés pyridiniques, on peut citer les composés décrits par exemple dans les brevets GB 1 026 978 et GB 1 153 196, comme la 2,5-diamino pyridine, la 2-(4-méthoxyphényl)amino 3-amino pyridine, la 2,3-diamino 6-méthoxy pyridine, la 2-(β-méthoxyéthyl)amino 3-amino 6-méthoxy pyridine, la 3,4-diamino pyridine, et leurs sels d'addition avec un acide.

D'autres bases d'oxydation pyridiniques utiles dans la présente invention sont les bases d'oxydation 3-amino pyrazolo-[1,5-a]-pyridines ou leurs sels d'addition décrits par exemple dans la demande de brevet FR 2801308. A titre d'exemple, on peut citer la pyrazolo[1,5-a]pyridin-3-ylamine ; la 2-acétylamino pyrazolo-[1,5-a] pyridin-3-ylamine ; la 2-morpholin-4-yl-pyrazolo[1,5-a]pyridin-3-ylamine ; l'acide 3-amino-pyrazolo[1,5-a]pyridin-2-carboxylique ; la 2-méthoxy-pyrazolo[1,5-a]pyridine-3-ylamino ; le (3-amino-pyrazolo[1,5-a]pyridine-7-yl)-méthanol ; le 2-(3-amino-pyrazolo[1,5-a]pyridine-5-yl)-éthanol ; le 2-(3-amino-pyrazolo[1,5-a]pyridine-7-yl)-éthanol ; le (3-amino-pyrazolo[1,5-a]pyridine-2-yl)-méthanol ; la 3,6-diamino-pyrazolo[1,5-a]pyridine ; la 3,4-diamino-pyrazolo[1,5-a]pyridine ; la pyrazolo[1,5-a]pyridine-3,7-diamine ; la 7-morpholin-4-yl-pyrazolo[1,5-a]pyridin-3-ylamine ; la pyrazolo[1,5-a]pyridine-3,5-diamine ; la 5-morpholin-4-yl-pyrazolo[1,5-a]pyridin-3-ylamine ; le 2-[(3-amino-pyrazolo[1,5-a]pyridin-5-yl)-(2-hydroxyéthyl)-amino]-éthanol ; le 2-[(3-amino-pyrazolo[1,5-a]pyridin-7-yl)-(2-hydroxyéthyl)-amino]-éthanol ; la 3-amino-pyrazolo[1,5-a]pyridine-5-ol ; 3-amino-pyrazolo[1,5-a]pyridine-4-ol ; la 3-amino-pyrazolo[1,5-a]pyridine-6-ol ; la 3-amino-pyrazolo[1,5-a]pyridine-7-ol ; ainsi que leurs d'addition avec un acide ou avec une base.

Parmi les dérivés pyrimidiniques, on peut citer les composés décrits par exemple dans les brevets DE 2359399 ; JP 88-169571 ; JP 05-63124 ; EP 0770375 ou demande de brevet WO 96/15765 comme la 2,4,5,6-tétra-aminopyrimidine, la 4-hydroxy 2,5,6-triaminopyrimidine, la 2-hydroxy 4,5,6-triaminopyrimidine, la 2,4-dihydroxy 5,6-diaminopyrimidine, la 2,5,6-triaminopyrimidine, et les dérivés pyrazolo-pyrimidiniques tels ceux mentionnés dans la demande de brevet FR-A-2750048 et parmi lesquels on peut citer la pyrazolo-[1,5-a]-pyrimidine-3,7-diamine ; la 2,5-diméthyl pyrazolo-[1,5-a]-pyrimidine-3,7-diamine ; la pyrazolo-[1,5-a]-pyrimidine-3,5-diamine ; la 2,7-diméthyl pyrazolo-[1,5-a]-pyrimidine-3,5-diamine ; le 3-amino pyrazolo-[1,5-a]-pyrimidin-7-ol ; le 3-amino pyrazolo-[1,5-a]-pyrimidin-5-ol ; le 2-(3-amino pyrazolo-[1,5-a]-pyrimidin-7-ylamino)-éthanol, le 2-(7-amino pyrazolo-[1,5-a]-pyrimidin-3-ylamino)-éthanol, le 2-[(3-amino-pyrazolo[1,5-a]pyrimidin-7-yl)-(2-hydroxy-éthyl)-amino]-éthanol, le 2-[(7-amino-pyrazolo[1,5-a]pyrimidin-3-yl)-(2-hydroxy-éthyl)-amino]-éthanol, la 5,6-diméthyl pyrazolo-[1,5-a]-pyrimidine-3,7-diamine, la 2,6-diméthyl pyrazolo-[1,5-a]-pyrimidine-3,7-diamine, la 2, 5, N 7, N 7-tetraméthyl pyrazolo-[1,5-a]-pyrimidine-3,7-diamine, la 3-amino-5-méthyl-7-imidazolylpropylamino pyrazolo-[1,5-a]-pyrimidine et leurs sels d'addition avec un acide et leurs formes tautomères, lorsqu'il existe un équilibre tautomérique.

Parmi les dérivés pyrazoliques, on peut citer les composés décrits dans les brevets DE 3843892, DE 4133957 et demandes de brevet WO 94/08969, WO 94/08970, FR-A-2 733 749 et DE 195 43 988 comme le 4,5-diamino 1-méthyl pyrazole, le 4,5-diamino 1-(β-hydroxyéthyl) pyrazole, le 3,4-diamino pyrazole, le 4,5-diamino 1-(4'-chlorobenzyl) pyrazole, le 4,5-diamino 1,3-diméthyl pyrazole, le 4,5-diamino 3-méthyl 1-phényl pyrazole, le 4,5-diamino 1-méthyl 3-phényl pyrazole, le 4-amino 1,3-diméthyl 5-hydrazino pyrazole, le 1-benzyl 4,5-diamino 3-méthyl pyrazole, le 4,5-diamino 3-tert-butyl 1-méthyl pyrazole, le 4,5-diamino 1-tert-butyl 3-méthyl pyrazole, le 4,5-diamino 1-(β-hydroxyéthyl) 3-méthyl pyrazole, le 4,5-diamino 1-éthyl 3-méthyl pyrazole, le 4,5-diamino 1-éthyl 3-(4'-méthoxyphényl) pyrazole, le 4,5-diamino 1-éthyl 3-hydroxyméthyl pyrazole, le 4,5-diamino 3-hydroxyméthyl 1-méthyl pyrazole, le 4,5-diamino 3-hydroxyméthyl 1-isopropyl pyrazole, le 4,5-diamino 3-méthyl 1-isopropyl pyrazole, le 4-amino 5-(2'-aminoéthyl)amino 1,3-diméthyl pyrazole, le 3,4,5-triamino pyrazole, le 1-méthyl 3,4,5-triamino pyrazole, le 3,5-diamino 1-méthyl 4-méthylamino pyrazole, le 3,5-diamino 4-(β-hydroxyéthyl)amino 1-méthyl pyrazole, et leurs sels d'addition avec un acide.

Parmi les dérivés indoliques ou indoliniques, on peut citer les composés décrits dans les brevets DE10240758 comme le 5,6-dihydroxy indole ou le 5,6-dihydroxy indoline.

La ou les bases d'oxydation sont en général présentes chacune en quantité comprise entre 0,001 à 10 % en poids environ du poids total de la composition tinctoriale, de préférence entre 0,005 et 6 %.

A titre de coupleurs présents dans la composition de coloration, on peut notamment citer les méta-phénylènediamines, les méta-aminophénols, les méta-diphénols, les coupleurs naphtaléniques, les coupleurs hétérocycliques et leur sels d'addition.

A titre d'exemple, on peut citer le 2-méthyl 5-aminophénol, le 5-N-(β-hydroxyéthyl)amino 2-méthyl phénol, le 6-chloro-2-méthyl-5-aminophénol, le 3-amino phénol, le 1,3-dihydroxy benzène, le 1,3-dihydroxy 2-méthyl benzène, le 4-chloro 1,3-dihydroxy benzène, le 2,4-diamino 1-(β-hydroxyéthyloxy) benzène, le 2-amino 4-(β-hydroxyéthylamino) 1-méthoxybenzène, le 1,3-diamino benzène, le 1,3-bis-(2,4-diaminophénoxy) propane, la 3-uréido aniline, le 3-uréido 1-diméthylamino benzène, le sésamol, le 1-β-hydroxyéthylamino-3,4-méthylènedioxybenzène, l'α-naphtol, le 2 méthyl-1-naphtol, le 6-hydroxy indole, le 4-hydroxy indole, le 4-hydroxy N-méthyl indole, la 2-amino-3-hydroxy pyridine, la 6- hydroxy benzomorpholine la 3,5-diamino-2,6-diméthoxypyridine, le 1-N-(β-hydroxyéthyl)amino-3,4-méthylène dioxybenzène, le 2,6-bis-(β-hydroxyéthylamino)toluène et leurs sels d'addition avec un acide.

Dans la composition de la présente invention, le ou les coupleurs sont chacun généralement présents en quantité comprise entre 0,001 et 10 % en poids environ du poids total de la composition tinctoriale, de préférence entre 0,005 et 6 %.

D'une manière générale, les sels d'addition des bases d'oxydation et des coupleurs utilisables dans le cadre de l'invention sont notamment choisis parmi les sels d'addition avec un acide tels que les chlorhydrates, les bromhydrates, les sulfates, les citrates, les succinates, les tartrates, les lactates, les tosylates, les benzènesulfonates, les phosphates et les acétates et les sels d'addition avec une base telles que la soude, la potasse, l'ammoniaque, les amines ou les alcanolamines.

La composition tinctoriale peut en outre contenir des colorants directs. Ces colorants directs utiles selon l'invention sont par exemple choisis parmi les colorants directs nitrés benzéniques neutres, acides ou cationiques, les colorants directs azoïques neutres acides ou cationiques, les colorants directs quinoniques et en particulier anthraquinoniques neutres, acides ou cationiques, les colorants directs aziniques, les colorants directs triarylméthaniques, les colorants directs indoaminiques et les colorants directs naturels.

Parmi les colorants directs benzéniques, on peut citer de manière non limitative les composés suivants:
1,4-diamino-2-nitrobenzène, 1-amino-2 nitro-4-β- hydroxyéthylaminobenzène,1-amino-2 nitro-4-bis(β-hydroxyéthyl)-aminobenzène, 1,4-Bis(β-hydroxyéthylamino)-2-nitrobenzène, 1-β-hydroxyéthylamino-2-nitro-4-bis-(β-hydroxyéthylamino)-benzène, 1-β-hydroxyéthylamino-2-nitro-4-aminobenzène, 1-β-hydroxyéthylamino-2-nitro-4-(éthyl)(β-hydroxyéthyl)-aminobenzène, 1-amino-3-méthyl-4-β-hydroxyéthylamino-6-nitrobenzène, 1-amino-2-nitro-4-β-hydroxyéthylamino-5-chlorobenzène, 1,2-Diamino-4-nitrobenzène, 1-amino-2-β-hydroxyéthylamino-5-nitrobenzène, 1,2-Bis-(β-hydroxyéthylamino)-4-nitrobenzène, 1-amino-2-tris-(hydroxyméthyl)-méthylamino-5-nitrobenzène, 1-Hydroxy-2-amino-5-nitrobenzène, 1-Hydroxy-2-amino-4-nitrobenzène, 1-Hydroxy-3-nitro-4-aminobenzène, 1-Hydroxy-2-amino-4,6-dinitrobenzène, 1-β-hydroxyéthyloxy-2-β-hydroxyéthylamino-5-nitrobenzène, 1-Méthoxy-2-β-hydroxyéthylamino-5-nitrobenzène, 1-β-hydroxyéthyloxy-3-méthylamino-4-nitrobenzène, 1-β,γ-dihydroxypropyloxy-3-méthylamino-4-nitrobenzène, 1-β-hydroxyéthylamino-4-β,γ-dihydroxypropyloxy-2-nitrobenzène, 1-β,γ-dihydroxypropylamino-4-trifluorométhyl-2-nitrobenzène, 1-β-hydroxyéthylamino-4-trifluorométhyl-2-nitrobenzène, 1-β-hydroxyéthylamino-3-méthyl-2-nitrobenzène, 1-β-aminoéthylamino-5-méthoxy-2-nitrobenzène, 1-Hydroxy-2-chloro-6-éthylamino-4-nitrobenzène, 1-Hydroxy-2-chloro-6-amino-4-nitrobenzène, 1-Hydroxy-6-bis-(β-hydroxyéthyl)-amino-3-nitrobenzène, 1-β-hydroxyéthylamino-2-nitrobenzène, 1-Hydroxy-4-β-hydroxyéthylamino-3-nitrobenzène.

Parmi les colorants directs azoïques, on peut citer les colorants azoïques cationiques décrits dans les demandes de brevets WO 95/15144, WO-95/01772 et EP-714954 dont le contenu fait partie intégrante de l'invention.

Parmi ces composés, on peut tout particulièrement citer les colorants suivants:
chlorure de 1,3-diméthyl-2-[[4-(diméthylamino)phényl]azo]-1H-Imidazolium, chlorure de 1,3-diméthyl-2-[(4-aminophényl)azo]-1H-Imidazolium, méthylsulfate de 1-méthyl-4-[(méthylphénylhydrazono)méthyl]-pyridinium.

On peut également citer parmi les colorants directs azoïques les colorants suivants, décrits dans le COLOUR INDEX INTERNATIONAL 3^{e} édition :
Disperse Red 17, Acid Yellow 9, Acid Black 1, Basic Red 22, Basic Red 76, Basic Yellow 57, Basic Brown 16, Acid Yellow 36, Acid Orange 7, Acid Red 33, Acid Red 35, Basic Brown 17, Acid Yellow 23, Acid Orange 24, Disperse Black 9.

On peut aussi citer le 1-(4'-aminodiphénylazo)-2-méthyl-4bis-(β-hydroxyéthyl) aminobenzène et l'acide 4-hydroxy-3-(2-méthoxyphénylazo)-1-naphtalène sulfonique.

Parmi les colorants directs quinoniques, on peut citer les colorants suivants :
Disperse Red 15, Solvent Violet 13, Acid Violet 43 ,Disperse Violet 1, Disperse Violet 4, Disperse Blue 1, Disperse Violet 8, Disperse Blue 3, Disperse Red 11 ,Acid Blue 62, Disperse Blue 7, Basic Blue 22, Disperse Violet 15, Basic Blue 99, ainsi que les composés suivants :
   1-N-méthylmorpholiniumpropylamino-4-hydroxyanthraquinone, 1-Aminopropylamino-4-méthylaminoanthraquinone, 1-Aminopropylaminoanthraquinone, 5-β-hydroxyéthyl-1,4-diaminoanthraquinone , 2-Aminoéthylaminoanthraquinone, 1,4-Bis-(β,γ-dihydroxypropylamino)-anthraquinone.

Parmi les colorants aziniques, on peut citer les composés suivants :
-Basic Blue 17 et Basic Red 2.

Parmi les colorants triarylméthaniques, on peut citer les composés suivants :
Basic Green 1, Acid blue 9, Basic Violet 3, Basic Violet 14, Basic Blue 7, Acid Violet 49, Basic Blue 26, Acid Blue 7.

Parmi les colorants indoaminiques, on peut citer les composés suivants :
- 2-β-hydroxyéthlyamino-5-[bis-(β-4'-hydroxyéthyl)amino]anilino-1,4-benzoquinone -2-β-hydroxyéthylamino-5-(2'-méthoxy-4'-amino)anilino-1,4-benzoquinone -3-N(2'-Chloro-4'-hydroxy)phényl-acétylamino-6-méthoxy-1,4-benzoquinone imine -3-N(3'-Chloro-4'-méthylamino)phényl-uréido-6-méthyl-1,4-benzoquinone imine -3-[4'-N-(Ethyl,carbamylméthyl)-amino]-phényl-uréido-6-méthyl-1,4-benzoquinone imine

Le ou les colorants directs représentent de préférence de 0,001 à 20% en poids environ du poids total de la composition prête à l'emploi et encore plus préférentiellement de 0,005 à 10% en poids environ.

Au moment de l'emploi, la composition de coloration d'oxydation telle que définie ci-dessus est mélangée à un agent oxydant tel que le peroxyde d'hydrogène, les persels tels que les persulfates ou un enzyme oxydase telle que l'uricase ou la laccase.

Selon un mode de réalisation particulier, la composition est une composition de coloration directe, c'est à dire exempte de base d'oxydation et de coupleur, contenant un ou plusieurs colorants directs tels que définis ci dessusdans un milieu cosmétique contenant au moins un agent alcalinisant. Cette composition peut de plus contenir un agent oxydant tel que le peroxyde d'hydrogène avant d'obtenir un éclaircissement des fibres kératiniques.

Le milieu approprié pour la teinture appelé aussi support de teinture est généralement constitué par de l'eau ou par un mélange d'eau et d'au moins un solvant organique pour solubiliser les composés qui ne seraient pas suffisamment solubles dans l'eau. A titre de solvant organique, on peut par exemple citer les alcanols inférieurs en C₁-C₄, tels que l'éthanol et l'isopropanol ; les polyols et éthers de polyols comme le 2-butoxyéthanol, le propylèneglycol, le monométhyléther de propylèneglycol, le monoéthyléther et le monométhyléther du diéthylèneglycol, ainsi que les alcools aromatiques comme l'alcool benzylique ou le phénoxyéthanol, et leurs mélanges.

Les solvants sont, de préférence, présents dans des proportions de préférence comprises entre 1 et 40 % en poids environ par rapport au poids total de la composition tinctoriale, et encore plus préférentiellement entre 5 et 30 % en poids environ.

La composition tinctoriale conforme à l'invention peut également renfermer divers adjuvants utilisés classiquement dans les compositions pour la teinture des cheveux, tels que des agents tensio-actifs anioniques, cationiques, non-ioniques, amphotères, zwitterioniques ou leurs mélanges, des polymères anioniques, cationiques, non-ioniques, amphotères, zwitterioniques ou leurs mélanges, des agents épaississants minéraux ou organiques, et en particulier les épaississants associatifs polymères anioniques, cationiques, non ioniques et amphotères, des agents antioxydants, des agents de pénétration, des agents séquestrants, des parfums, des tampons, des agents dispersants, des agents de conditionnement tels que par exemple des silicones volatiles ou non volatiles, modifiées ou non modifiées, des agents filmogènes, des céramides, des agents conservateurs, des agents opacifiants.

Les adjuvants ci-dessus sont en général présents en quantité comprise pour chacun d'eux entre 0,01 et 20 % en poids par rapport au poids de la composition.

La composition de teinture peut se présenter sous des formes diverses, telles que sous forme de liquides, de crèmes, de gels, ou sous toute autre forme appropriée pour réaliser une teinture des fibres kératiniques, et notamment des cheveux humains.

En particulier, dans le mode de réalisation présenté Figure 2, une feuille souple 17 formée dans le matériau 1 est scellée par la première structure extérieure 6, qui contient par exemple des polyoléfines ou est en polyoléfines, à un fond 18 de manière à former un couvercle dudit fond 18, l'ensemble délimitant un logement d'un dispositif de conditionnement 19 apte à contenir un produit cosmétique, et en particulier une composition de coloration des fibres kératiniques.

De fait, une face externe 20 de ce couvercle est formée par la deuxième structure extérieure 2 du matériau 1 formant la feuille souple 17, alors que la première structure extérieure 6 du matériau 1 forme une face interne 21 délimitant au moins en partie ledit logement, cette face interne 21 étant mise au contact dudit produit.

En particulier, le fond 18 est réalisé dans un matériau rigide et embossé de manière à présenter un creux délimitant en partie ledit logement, ce creux étant apte à contenir une quantité de produit, et à reposer par ce fond sur une surface plane. En particulier, la feuille souple 17 est scellée à un épaulement 22 du fond 18, cet épaulement 22 délimitant une ouverture dudit logement obturée par ladite feuille souple 17.

Pour l'obturation (scellement), tous les procédés connus conviennent (thermoscellage, ultrasons, chauffage à induction, chauffage haute fréquence). De préférence, cette obturation assure une fermeture hermétique du dispositif de conditionnement 19, le produit étant contenu de manière hermétique dans ledit logement. L'ouverture d'un tel dispositif ainsi fermé peut s'effectuer par exemple par découpe ou décollement (peeling) ou déchirure, par exemple percement, de la feuille souple 17.

En variante, représentée Figure 3, le matériau 1 est utilisé pour réaliser au moins l'un des sachets 30 et 31 à feuilles souples d'un dispositif de conditionnement 32 tel que décrit dans le brevet FR-2830520 incorporé ici par référence. En particulier, un tel dispositif 32 est prévu pour la distribution conjointe de premier et second produits conditionnés séparément dans lesdits sachets 30 et 31, ces sachets étant montés dans une platine 33, tel qu'un organe de distribution 34 du dispositif 32 est mobile par rapport à cette platine 33. Le dispositif 32 est configuré de manière à permettre le passage irréversible, d'une première configuration dans laquelle les premier et second sachets sont isolés d'au moins un orifice de distribution 35 formé par ledit organe de distribution 34 à une seconde configuration dans laquelle les premier et second récipients sont en communication avec ledit orifice de distribution 35.

Selon un premier mode de réalisation des sachets tels que 30 et 31 au moyen du matériau 1, on découpe deux feuilles de même dimension dans le matériau 1, ces deux feuilles étant ensuite superposées et fixées entre elles le long de leur périphérie. Les feuilles sont fixées l'une à l'autre de telle sorte que la deuxième structure extérieure 2 définisse le pourtour extérieur du sachet, alors que la première structure extérieure 6 définit le pourtour intérieur du sachet, destiné à être mis au contact du produit.

Alternativement, un tel sachet peut être obtenu en repliant sur elle-même une feuille découpée dans le matériau 1, de telle sorte que deux pans de cette feuille repliés l'un sur l'autre soient fixés entre eux le long de leur périphérie. Là encore, la feuille est agencée de telle sorte que la première structure extérieure 6 définisse un pourtour intérieur du sachet ainsi formé.

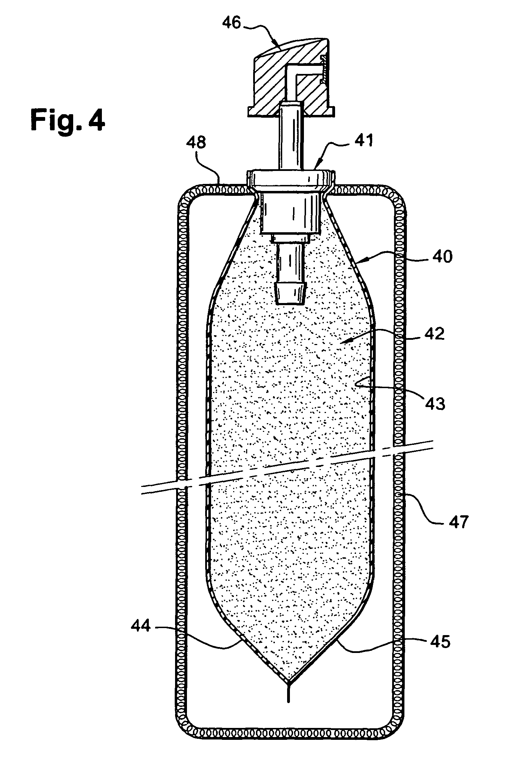

Figure 4, un sachet 40 tel que les sachets 30 ou 31 est équipé d'une pompe 41 sans reprise d'air, tel que l'actionnement de cette pompe 41 permette la distribution du produit contenu dans ledit logement 42 délimité par le pourtour intérieur 43 du sachet. En particulier, la pompe 41 est montée entre deux feuilles respectivement 44 et 45 découpées dans le matériau 1 pour former ledit sachet 40. Le pourtour intérieur 43 du sachet étant formé par les premières structures extérieures telles que 6 respectives de ces deux feuilles. De préférence, ces premières structures extérieures telles que 6 sont soudées de manière étanche sur le pourtour extérieur du corps de la pompe 41 de manière à assurer un montage étanche.

Les feuilles 44 et 45 découpées dans le matériau 1 sont souples conférant ainsi des parois souples audit sachet, les parois du sachet s'écrasant alors sur elle-même au fur et à mesure de la vidange d'un tel sachet obtenu par l'actionnement de ladite pompe 41. La pompe 41 étant sans reprise d'air, la distribution de produit conduit à une diminution progressive du volume intérieur dudit logement 42, les feuilles 44 et 45 se collapsant l'une sur l'autre.

De préférence, la pompe 41 peut être équipée d'un organe d'actionnement 46 permettant de faciliter l'actionnement manuel de ladite pompe en vue de la distribution du produit.

Le sachet 40 est de préférence disposé dans une armature rigide 47 de manière à pouvoir être stocké verticalement et améliorer ainsi la vidange du sachet 40. L'armature rigide 47 est par exemple réalisée à partir de matériau tel que du carton. Elle définit un volume intérieur apte à recevoir ledit sachet 40 de manière à ce que ce dernier soit suspendu au niveau d'une plaque supérieure 48, et s'étende à l'intérieur de ladite armature sans y subir de contrainte exercée au niveau de son pourtour extérieur.

En variante non représentée, dans un sachet tel que 40, on peut remplacer la pompe 41 par un corps comportant un passage pour permettre la distribution de produit, les feuilles 44 et 45 étant alors soudées sur le pourtour extérieur de ce corps.

Par exemple, ce corps constitue un organe de connexion apte à être monté sur un moyen de distribution du produit enfermé dans le dispositif. Par exemple, le corps est équipé d'un clapet obturant de manière étanche ledit passage, l'ouverture de ce clapet pouvant être obtenue lors du montage dudit sachet sur ledit moyen de distribution.

En variante, ce passage peut être obturé par un bouchon. Et la sortie du produit d'un tel sachet 40 peut alors être obtenue par simple pression exercée par l'utilisateur sur le pourtour extérieur du sachet, après avoir détaché ledit bouchon de son corps.

Dans toute la description, l'expression « comportant un » doit être considérée comme étant synonyme de « comportant au moins un », sauf si le contraire est spécifié.

## Revendications

1. Dispositif (19, 32, 40) de conditionnement comprenant :
i) au moins une feuille souple (17, 30, 31, 44, 45) délimitant au moins en partie un logement, ladite feuille souple formant un complexe multicouche (1) comportant :
a) une couche métallique (4);
b) un agent d'adhésion (5) comportant un copolymère comprenant entre 7 % et 19% en poids de motifs carboxyliques et/ou carboxylates, les motifs carboxyliques pouvant être sous forme d'acide ou de sels, et
c) une couche (6) d'un matériau non métallique, liée à la couche métallique via ledit agent d'adhésion,
ii) une composition cosmétique disposée à l'intérieur du logement.

2. Dispositif selon la revendication 1 **caractérisé en ce que** le motif carboxylate est un motif acrylate ou méthacrylate.

3. Dispositif selon la revendication précédente **caractérisé en ce que** le motif acrylate est l'acrylate d'éthyle.

4. Dispositif selon l'une quelconque des revendications 1 a 3 **caractérisé en ce que** le motif carboxylique est l'acide acrylique ou méthacrylique.

5. Dispositif selon l'une quelconque des revendications précédentes **caractérisé en ce que** le copolymère comporte au moins un deuxième monomère présentant un motif alkylénique dont la chaîne alkyle comprend de 2 à 10 atomes de carbone.

6. Dispositif selon la revendication 5 **caractérisé en ce que** l'agent d'adhésion est un copolymère d'éthylène et d'acrylate d'éthyle.

7. Dispositif selon la revendication 5 **caractérisé en ce que** l'agent d'adhésion est un copolymère d'éthylène et d'acide acrylique.

8. Dispositif selon l'une quelconque des revendications précédentes **caractérisé en ce que** l'agent d'adhésion comporte entre 7 % et 19 %, plus particulièrement entre 8% et 11%, plus précisément entre 8,5% et 10.5%, et de préférence 9,7%, en poids d'un acide acrylique et ou d'un ester acrylique.

9. Dispositif selon l'une quelconque des revendications précédentes **caractérisé en ce que** la couche d'un matériau non métallique est réalisée dans un matériau thermoplastique, de préférence polymère, par exemple à partir de polyéthylène.

10. Dispositif selon l'une quelconque des revendications précédentes **caractérisé en ce que** la couche métallique est réalisée à partir d'aluminium ou d'un alliage comportant de l'aluminium.

11. Dispositif selon l'une quelconque des revendications précédentes **caractérisé en ce que** la feuille souple présente une épaisseur comprise entre 70 et 232 µm, tel que
- la couche métallique a une épaisseur comprise entre 6 et 12 µm, de préférence de l'ordre de 12 µm,
- la couche d'agent d'adhésion a une épaisseur comprise entre 10 et 40 µm, de préférence de l'ordre de 25 µm,
- la couche d'un matériau non métallique a une épaisseur comprise entre 40 et 150 µm, de préférence de l'ordre de 75 µm.

12. Dispositif selon l'une quelconque des revendications précédentes **caractérisé en ce qu'**il comporte une deuxième structure extérieure (2) accolée à la couche métallique de manière à former une face externe dirigée vers l'extérieur dudit logement, cette deuxième structure extérieure étant réalisée dans un matériau thermoplastique, de préférence polymère, par exemple à partir de polyéthylène téréphtalate.

13. Dispositif selon la revendication précédente **caractérisé en ce que** la deuxième structure extérieure est solidaire de la couche métallique par l'intermédiaire d'une couche d'un deuxième agent d'adhésion (3), notamment une colle à base de polyuréthanne.

14. Dispositif selon la revendication précédente **caractérisé en ce que** la couche de deuxième agent d'adhésion a une épaisseur comprise entre 2 et 5 µm, de préférence de l'ordre de 4 µm.

15. Dispositif selon l'une quelconque des revendications 12 à 14 **caractérisé en ce que** la deuxième structure extérieure a une épaisseur comprise entre 12 et 25 µm, de préférence de l'ordre de 12 µm.

16. Dispositif selon l'une quelconque des revendications précédentes **caractérisé en ce que** le complexe multicouche de la feuille souple est obtenu par laminage.

17. Dispositif selon l'une quelconque des revendications précédentes **caractérisé en ce que** l'agent d'adhésion est extrudé.

18. Dispositif selon l'une quelconque des revendications précédentes **caractérisé en ce que** la feuille souple est au moins en partie élastiquement déformable.

19. Dispositif selon l'une quelconque des revendications précédentes **caractérisé en ce qu'**il comporte un fond présentant le logement apte à recevoir ledit produit, ce fond étant obturé par ladite feuille souple, par exemple scellée sur un chant de ce fond, pour délimiter ledit logement.

20. Dispositif selon l'une quelconque des revendications précédentes **caractérisé en ce qu'**il se présente sous la forme d'un sachet comportant au moins une deuxième paroi scellée à la feuille souple pour délimiter ledit logement à l'intérieur duquel est enfermé le produit, cette deuxième paroi étant de préférence réalisée à partir du même matériau que la feuille souple.

21. Dispositif selon l'une quelconque des revendications précédentes **caractérisé en ce qu'**il comporte un organe de distribution permettant la distribution du produit enfermé dans le dispositif.

22. Dispositif selon la revendication précédente **caractérisé en ce que** l'organe de distribution est une pompe sans reprise d'air.

23. Dispositif selon l'une quelconque des revendications précédentes **caractérisé en ce que** la composition cosmétique est alcalins.

24. Dispositif selon l'une quelconque des revendications précédentes **caractérisé en ce que** le produit est une composition contenant un agent alcalinisant.

25. Dispositif selon la revendication 24 dans lequel l'agent alcalinisant est choisi parmi l'ammoniaque et/ou l'éthanolamine et/ou le silicate de sodium.

26. Dispositif selon la revendication 24 ou 25 dans lequel la composition contient de plus au moins une base d'oxydation et éventuellement au moins un coupleur.

27. Dispositif selon la revendication 24, 25 ou 26 dans lequel la composition contient un ou plusieurs colorants directs.

28. Utilisation d'un dispositif selon l'une quelconque des revendications précédentes pour conditionner de manière étanche une composition alcaline.

29. Utilisation d'un dispositif selon l'une quelconque des revendications précédentes pour conditionner de manière étanche une composition contenant un agent alcalinisant.

30. Utilisation selon la revendication 29 pour conditionner une composition contenant de l'ammoniaque et/ou de l'éthanolamine et/ou le silicate de sodium.

31. Utilisation selon la revendication 29 ou 30 dans laquelle la composition contient de plus au moins une base d'oxydation et éventuellement au moins un coupleur.

32. Utilisation selon l'une quelconque des revendications 29 à 31 dans laquelle la composition contient un ou plusieurs colorants directs.

## Claims

1. Packaging device (19, 32, 40) comprising:
i) at least one flexible sheet (17, 30, 31, 44, 45) delimiting at least in part a housing, the said flexible sheet forming a multilayer complex (1) comprising:
a) a metal layer (4) ;
b) a bonding agent (5) comprising a copolymer comprising between 7% and 19% by weight of carboxylic and/or carboxylate units, it being possible for the carboxylic units to be in the acid form or in the form of salts, and
c) a layer (6) of a non-metallic material bonded to the metal layer via the said bonding agent,
ii) a cosmetic composition positioned inside the housing.

2. Device according to Claim 1, **characterized in that** the carboxylate unit is an acrylate or methacrylate unit.

3. Device according to the preceding claim, **characterized in that** the acrylate unit is ethyl acrylate.

4. Device according to any one of Claims 1 to 3, **characterized in that** the carboxylic unit is acrylic or methacrylic acid.

5. Device according to any one of the preceding claims, **characterized in that** the copolymer comprises at least one second monomer exhibiting an alkylene unit, the alkyl chain of which comprises from 2 to 10 carbon atoms.

6. Device according to Claim 5, **characterized in that** the bonding agent is a copolymer of ethylene and of ethyl acrylate.

7. Device according to Claim 5, **characterized in that** the bonding agent is a copolymer of ethylene and of acrylic acid.

8. Device according to any one of the preceding claims, **characterized in that** the bonding agent comprises between 7% and 19%, more particularly between 8% and 11%, more specifically between 8.5% and 10.5%, and preferably 9.7%, by weight of acrylic acid and/or of an acrylic ester.

9. Device according to any one of the preceding claims, **characterized in that** the layer of a non-metallic material is made of a thermoplastic, preferably a polymer, for example from polyethylene.

10. Device according to any one of the preceding claims, **characterized in that** the metal layer is made of aluminium or of an alloy comprising aluminium.

11. Device according to any one of the preceding claims, **characterized in that** the flexible sheet exhibits a thickness of between 70 and 232 µm, such that
- the metal layer has a thickness of between 6 and 12 µm, preferably of the order of 12 µm,
- the layer of bonding agent has a thickness of between 10 and 40 µm, preferably of the order of 25 µm,
- the layer of a non-metallic material has a thickness of between 40 and 150 µm, preferably of the order of 75 µm.

12. Device according to any one of the preceding claims, **characterized in that** it comprises a second outer structure (2) attached to the metal layer so as to form an outer face directed towards the outside of the said housing, this second outer structure being made of a thermoplastic, preferably a polymer, for example from poly(ethylene terephthalate).

13. Device according to the preceding claim, **characterized in that** the second outer structure is firmly attached to the metal layer via a layer of a second bonding agent (3), in particular a polyurethane-based adhesive.

14. Device according to the preceding claim, **characterized in that** the layer of second bonding agent has a thickness of between 2 and 5 µm, preferably of the order of 4 µm.

15. Device according to any one of Claims 12 to 14, **characterized in that** the second outer structure has a thickness of between 12 and 25 µm, preferably of the order of 12 µm.

16. Device according to any one of the preceding claims, **characterized in that** the multilayer complex of the flexible sheet is obtained by laminating.

17. Device according to any one of the preceding claims, **characterized in that** the bonding agent is extruded.

18. Device according to any one of the preceding claims, **characterized in that** the flexible sheet is at least in part deformable elastically.

19. Device according to any one of the preceding claims, **characterized in that** it comprises a bottom part exhibiting a housing capable of receiving the said product, this bottom part being closed off by the said flexible sheet, for example sealed over one side of this bottom part, in order to delimit the said housing.

20. Device according to any one of the preceding claims, **characterized in that** it is provided in the form of a sachet comprising at least one second wall sealed to the flexible sheet in order to delimit the said housing inside which the product is enclosed, this second wall preferably being produced from the same material as the flexible sheet.

21. Device according to any one of the preceding claims, **characterized in that** it comprises a dispensing means which makes possible the dispensing of the product enclosed in the device.

22. Device according to the preceding claim, **characterized in that** the dispensing means is an airless pump.

23. Device according to any one of the preceding claims, **characterized in that** the cosmetic composition is alkaline.

24. Device according to any one of the preceding claims, **characterized in that** the product is a composition comprising a basifying agent.

25. Device according to Claim 24, in which the basifying agent is chosen from aqueous ammonia and/or ethanolamine and/or sodium silicate.

26. Device according to Claim 24 or 25, in which the composition additionally comprises at least one oxidation base and optionally at least one coupler.

27. Device according to Claim 24, 25 or 26, in which the composition comprises one or more direct dyes.

28. Use of a device according to any one of the preceding claims, for the leaktight packaging of an alkaline composition.

29. Use of a device according to any one of the preceding claims, for the leaktight packaging of a composition comprising a basifying agent.

30. Use according to Claim 29, for the packaging of a composition comprising aqueous ammonia and/or ethanolamine and/or sodium silicate.

31. Use according to Claim 29 or 30, in which the composition additionally comprises at least one oxidation base and optionally at least one coupler.

32. Use according to any one of Claims 29 to 31, in which the composition comprises one or more direct dyes.

## Patentansprüche

1. Verpackungsvorrichtung (19, 32, 40), umfassend:
i) mindestens eine geschmeidige Folie (17, 30, 31, 44, 45), die einen Aufnahmeraum mindestens teilweise begrenzt, wobei die geschmeidige Folie einen mehrlagigen Komplex (1) bildet, der Folgendes aufweist:
a) eine metallische Schicht (4);
b) einen Klebstoff (5), der ein Copolymer aufweist, welches zwischen 7 und 19 Gewichts-% an Carbonsäure- und/oder Carboxylatgruppen umfasst, wobei die Carbonsäuregruppen in Säureform oder als Salze vorliegen können, und
c) eine Schicht (6) eines nicht-metallischen Werkstoffs, welche mittels des Klebstoffs mit der metallischen Schicht verbunden ist,
ii) eine kosmetische Zusammensetzung, die im Inneren des Aufnahmeraums angeordnet ist.

2. Vorrichtung nach Anspruch 1, **dadurch gekennzeichnet, dass** es sich bei der Carboxylatgruppe um eine Acrylat- oder Methacrylatgruppe handelt.

3. Vorrichtung nach dem vorhergehenden Anspruch, **dadurch gekennzeichnet, dass** es sich bei der Acrylatgruppe um Ethylacrylat handelt.

4. Vorrichtung nach einem beliebigen der Ansprüche 1 bis 3, **dadurch gekennzeichnet, dass** es sich bei der Carbonsäuregruppe um Acryl- oder Methacrylsäure handelt.

5. Vorrichtung nach einem beliebigen der vorhergehenden Ansprüche, **dadurch gekennzeichnet, dass** das Copolymer mindestens ein zweites Monomer aufweist, das eine Alkylengruppe aufweist, deren Alkylkette 2 bis 10 Kohlenstoffatome umfasst.

6. Vorrichtung nach Anspruch 5, **dadurch gekennzeichnet, dass** es sich bei dem Klebstoff um ein Copolymer von Ethylen und Ethylacrylat handelt.

7. Vorrichtung nach Anspruch 5, **dadurch gekennzeichnet, dass** es sich bei dem Klebstoff um ein Copolymer von Ethylen und Acrylsäure handelt.

8. Vorrichtung nach einem beliebigen der vorhergehenden Ansprüche, **dadurch gekennzeichnet, dass** der Klebstoff zwischen 7 und 19, insbesondere zwischen 8 und 11, genauer gesagt zwischen 8,5 und 10,5, und vorzugsweise 9,7 Gewichts-% einer Acrylsäure oder eines Acrylsäureesters aufweist.

9. Vorrichtung nach einem beliebigen der vorhergehenden Ansprüche, **dadurch gekennzeichnet, dass** die Schicht aus einem nicht-metallischen Werkstoff aus einem thermoplastischen, vorzugsweise polymeren Werkstoff hergestellt ist, beispielsweise aus Polyethylen.

10. Vorrichtung nach einem beliebigen der vorhergehenden Ansprüche, **dadurch gekennzeichnet, dass** die metallische Schicht aus Aluminium oder einer Legierung, die Aluminium aufweist, hergestellt ist.

11. Vorrichtung nach einem beliebigen der vorhergehenden Ansprüche, **dadurch gekennzeichnet, dass** die geschmeidige Folie eine Dicke im Bereich von 70 bis 232 µm aufweist, derart, dass
- die metallische Schicht eine Dicke im Bereich von 6 bis 12 µm hat, vorzugsweise in der Größenordnung von 12 µm,
- die Klebstoffschicht eine Dicke im Bereich von 10 bis 40 µm hat, vorzugsweise in der Größenordnung von 25 µm,
- die Schicht aus einem nicht-metallischen Werkstoff eine Dicke im Bereich von 40 bis 150 µm hat, vorzugsweise in der Größenordnung von 75 µm.

12. Vorrichtung nach einem beliebigen der vorhergehenden Ansprüche, **dadurch gekennzeichnet, dass** sie eine zweite äußere Struktur (2) aufweist, die an die metallische Schicht derart angefügt ist, dass eine Außenseite gebildet wird, welche dem Außenbereich des Aufnahmeraums zugewandt ist, wobei diese zweite äußere Struktur aus einem thermoplastischen, vorzugsweise polymeren Werkstoff hergestellt ist, beispielsweise aus Polyethylenterephthalat.

13. Vorrichtung nach dem vorhergehenden Anspruch, **dadurch gekennzeichnet, dass** die zweite äußere Struktur mittels einer Schicht aus einem zweiten Klebstoff (3), insbesondere einem Kleber auf Grundlage von Polyurethan, fest mit der metallischen Schicht verbunden ist.

14. Vorrichtung nach dem vorhergehenden Anspruch, **dadurch gekennzeichnet, dass** die Schicht aus dem zweiten Klebstoff eine Dicke im Bereich von 2 bis 5 µm, vorzugsweise in der Größenordnung von 4 µm, hat.

15. Vorrichtung nach einem beliebigen der Ansprüche 12 bis 14, **dadurch gekennzeichnet, dass** die zweite äußere Struktur eine Dicke im Bereich von 12 bis 25 µm, vorzugsweise in der Größenordnung von 12 µm, hat.

16. Vorrichtung nach einem beliebigen der vorhergehenden Ansprüche, **dadurch gekennzeichnet, dass** der mehrlagige Komplex der geschmeidigen Folie durch Laminieren erhalten wird.

17. Vorrichtung nach einem beliebigen der vorhergehenden Ansprüche, **dadurch gekennzeichnet, dass** der Klebstoff extrudiert wird.

18. Vorrichtung nach einem beliebigen der vorhergehenden Ansprüche, **dadurch gekennzeichnet, dass** die geschmeidige Folie mindestens teilweise elastisch verformbar ist.

19. Vorrichtung nach einem beliebigen der vorhergehenden Ansprüche, **dadurch gekennzeichnet, dass** sie einen Boden aufweist, der den Aufnahmeraum aufweist, welcher dazu befähigt ist, das Produkt aufzunehmen, wobei dieser Boden durch die geschmeidige Folie abgedichtet ist, wobei sie beispielsweise auf eine Schmalseite dieses Bodens aufgesiegelt ist, um den Aufnahmeraum zu begrenzen.

20. Vorrichtung nach einem beliebigen der vorhergehenden Ansprüche, **dadurch gekennzeichnet, dass** sie in Form eines Beutels vorliegt, der mindestens eine zweite Wand aufweist, welche auf die geschmeidige Folie aufgesiegelt ist, um den Aufnahmeraum zu begrenzen, innerhalb dessen das Produkt eingeschlossen ist, wobei diese zweite Wand vorzugsweise aus demselben Werkstoff wie die geschmeidige Folie hergestellt ist.

21. Vorrichtung nach einem beliebigen der vorhergehenden Ansprüche, **dadurch gekennzeichnet, dass** sie ein Abgabeglied aufweist, welches die Abgabe des Produkts ermöglicht, das in der Vorrichtung eingeschlossen ist.

22. Vorrichtung nach dem vorhergehenden Anspruch, **dadurch gekennzeichnet, dass** es sich bei dem Abgabeglied um eine Pumpe ohne Belüftung handelt.

23. Vorrichtung nach einem beliebigen der vorhergehenden Ansprüche, **dadurch gekennzeichnet, dass** die kosmetische Zusammensetzung alkalisch ist.

24. Vorrichtung nach einem beliebigen der vorhergehenden Ansprüche, **dadurch gekennzeichnet, dass** das Produkt eine Zusammensetzung ist, die ein alkalisch machendes Mittel enthält.

25. Vorrichtung nach Anspruch 24, wobei das alkalisch machende Mittel aus Ammoniaklösung und/oder Ethanolamin und/oder Natriumsilikat ausgewählt ist.

26. Vorrichtung nach Anspruch 24 oder 25, wobei die Zusammensetzung darüber hinaus mindestens eine Oxidationsbase und möglicherweise mindestens einen Kuppler enthält.

27. Vorrichtung nach Anspruch 24, 25 oder 26, wobei die Zusammensetzung einen oder mehrere direktziehende Farbstoffe enthält.

28. Verwendung einer Vorrichtung nach einem beliebigen der vorhergehenden Ansprüche, um eine alkalische Zusammensetzung auf abdichtende Weise zu verpacken.

29. Verwendung einer Vorrichtung nach einem beliebigen der vorhergehenden Ansprüche, um eine Zusammensetzung, die ein alkalisch machendes Mittel enthält, auf abdichtende Weise zu verpacken.

30. Verwendung nach Anspruch 29, um eine Zusammensetzung, die Ammoniaklösung und/oder Ethanolamin und/oder Natriumsilikat enthält, zu verpacken.

31. Verwendung nach Anspruch 29 oder 30, wobei die Zusammensetzung darüber hinaus mindestens eine Oxidationsbase und möglicherweise mindestens einen Kuppler enthält.

32. Verwendung nach einem beliebigen der Ansprüche 29 bis 31, wobei die Zusammensetzung einen oder mehrere direktziehende Farbstoffe enthält.
